**Europäisches Patentamt**

**European Patent Office**

**Office européen des brevets**

(19)

(11) Veröffentlichungsnummer: **0 226 986**
**A2**

(12) # EUROPÄISCHE PATENTANMELDUNG

(21) Anmeldenummer: 86117387.0

(51) Int. Cl.⁴: **B65G 17/38**

(22) Anmeldetag: 13.12.86

(30) Priorität: 21.12.85 DE 3545634

(43) Veröffentlichungstag der Anmeldung:
01.07.87 Patentblatt 87/27

(84) Benannte Vertragsstaaten:
**BE DE ES FR GB IT**

(71) Anmelder: **Aumund-Fördererbau Gesellschaft
mit beschränkter Haftung, Maschinenfabrik
Saalhoffer Strasse 17
D-4134 Rheinberg 1(DE)**

(72) Erfinder: **Rinio, Wolfgang
Lange Strasse 65
D-4132 Kamp-Lintfort(DE)**

(74) Vertreter: **Stark, Walter, Dr.-Ing.
Moerser Strasse 140
D-4150 Krefeld(DE)**

(54) **Buchsenförderkette.**

(57) Buchsenförderkette mit Flachlaschen, eingesetzt als Zugorgan für Gliederbandförderer und Becherwerke, erhält Laschen in geschmiedeter Ausführung mit Entlastungsausschnitten zur Verbesserung des Kraftlinienflusses bei gleichzeitiger Verringerung des Eigengewichtes. Die Nutzung des Abstützeffektes trägt dazu bei, Stöße zu verringern und das Gewicht zu reduzieren. Bei Becherwerken ergibt sich zusätzlich eine erhebliche Reduzierung des Eigengewichtes durch Spiel zwischen Becher und Kette zur Dämpfung der Stöße aus der Kettendynamik.

Figur 1

EP 0 226 986 A2

## Buchsenförderkette

Die Erfindung betrifft Buchsenförderketten, die als Zugorgane für Gliederbandförderer und Becherwerke eingesetzt werden.

Mit der Tendenz zu größeren Massenströmen und/oder größeren Förderhöhen steigen die Anforderungen an die als Zugorgane eingesetzten Förderketten. Die Belastung der Ketten resultiert aus dem Eigengewicht der Tragorgane, wie Förderträge und Becher, dem Eigengewicht der Förderketten und dem Belastungsanteil aus dem Fördergut. Hierzu addieren sich jedoch dynamische Zusatzlasten aus dem Polygoneffekt, in besonderem Maße bei Becherwerken mit hoher Umfangsgeschwindigkeit zur Fliehkraftentleerung. Eine Erhöhung der Tragfähigkeit der Ketten bedeutet normalerweise auch eine Erhöhung des Eigengewichtes. Hier wird jedoch schnell der Punkt erreicht, wo die mögliche Erhöhung der Nutzlast aufgezehrt wird durch das höhere Eigengewicht der Kette. Maßnahmen zur Verringerung der dynamischen Zusatzlasten, z.B. durch Einsatz von Ketten mit kleinerer Teilung, sind möglich, jedoch sind hier wirtschaftliche Grenzen gesetzt. Auch das Gewicht der Tragorgane kann aus wirtschaftlichen und beanspruchungstechnischen Gründen kaum verringert werden. Die erfindungsgemäße Aufgabe besteht also darin, das Eigengewicht der Ketten zu verringern durch entsprechende fertigungs-und werkstofftechnische Maßnahmen bei gleichzeitiger Verbesserung der Betriebsfestigkeit.

Zum Einsatz kommen bekannterweise Buchsenförderketten als Flachlaschenketten und als Gabellaschenketten.

Flachlaschenketten haben Laschen, hergestellt aus Flachstahl. Für die Verbindung mit den Tragorganen werden die Außenlaschen meist als Winkellaschen ausgeführt. Nachteilig bei den Flachlaschenketten ist die begrenzte Betriebsfestigkeit durch hohe Spannungsspitzen am Bohrungsrand und die hierdurch gegebene schlechte Werkstoffausnutzung.

Gabellaschenketten mit gekröpften Laschen werden als Zugelement für Raupenfahrwerke eingesetzt und haben zur Befestigung der Bodenplatten Durchbrüche zwischen den Laschenbohrungen. Für die Befestigungsschrauben sind zusätzliche Bohrungen durch den Reststeg vorgesehen, ausgehend von den Durchbrüchen. Durch diese konstruktiven Erfordernisse, in Verbindung mit der Biegebeanspruchung aus der Laschenkröpfung ergibt sich eine große Laschenstärke mit hohem Eigengewicht bei schlechter Werkstoffausnutzung. Weiter beeinträchtigen schmiedetechnisch bedingte Grate und Materialfalten an den Durchbrüchen, deren Kerben Ausgangspunkt für Dauerbrüche sind, in erheblichem Maße die erreichbare Betriebsfestigkeit.

Als Vorteil der Gabellaschenkette erweist sich die Möglichkeit einer wirtschaftlichen Fertigung in großen Stückzahlen auf entsprechend rationalisierten Fertigungsstraßen, ausgehend von einem gesenkgeschmiedeten Rohling.

Die erfindungsgemäße Aufgabe besteht darin, die Betriebsfestigkeit der beanspruchungsgünstigeren Flachlaschenkette zu verbessern bei gleichzeitiger Verringerung des Eigengewichtes unter Nutzung der für geschmiedete Gabellaschenketten vorhandenen kostengünstigen Fertigungseinrichtungen.

Gemäß der Erfindung werden die Laschen der Buchsenförderketten mit Entlastungsausschnitten zwischen den Bohrungen ausgeführt, wodurch sich eine Erhöhung der Betriebsfestigkeit bei gleichzeitiger Verringerung des Eigengewichtes ergibt. Da bei der Flachlasche die Kröpfung entfällt, ist auch die Gefahr der Faltenbildung beseitigt. Die Herstellung erfolgt durch Warmformgebung, vorzugsweise durch Gesenkschmieden. Auch die überlegenen Werkstoffeigenschaften der geschmiedeten Stähle bezüglich Festigkeit und Duktilität in Verbindung mit einem gleichmäßigen Gefüge tragen dazu bei, die Betriebsfestigkeit weiter zu verbessern für ein optimales Verhältnis von Nutzlast zu Eigengewicht.

Bei der schmiedetechnischen Herstellung des Entlastungsausschnittes entstehen Gratansätze als Kerben, die nur mit hohem Aufwand zu entfernen sind. Diese Gratansätze entfallen, wenn entsprechend einem weiteren Anspruch der Erfindung der Entlastungsausschnitt nicht durchgehend ausgeführt wird. Es verbleibt ein Restquerschnitt in U- oder Doppel-T-Form, dessen Mehrgewicht jedoch bei weitem kompensiert wird durch glatte, kerbarme Übergänge vom Reststeg zu den Laschenaußenflächen. Der Reststeg bedeutet zusätzlich eine Erhöung der Belastbarkeit durch Querkräfte, die z.B. beim Becherwerksbetrieb mit unverzahnten Antriebsrädern bei Abstützung der Laschen auf entsprechenden Stützflächen an den Antriebsrädern entstehen.

Dieser vorstehend beschriebene Stützeffekt verringert den Stoß beim Auflauf der Ketten auf die Kettenräder und reduziert auch die Flächenpressung zwischen Kettenbuchse und Antriebsscheibe. Als Folge davon können Buchsen mit geringerer Wandstärke eingesetzt werden, was ebenfalls zur Verringerung des Kettengewichtes beiträgt. Die Standzeit hingegen wird verlängert, bedingt durch den geringeren Verschleiß aus der kraftschlüssigen Drehmomentenübertragung am glatten Antriebsrad.

Die Verdickung der Kettenlaschen auf der Kettenradauflaufseite hat den Zweck, auch hier eine große Auflagefläche zu schaffen für lange Standzeiten ohne örtliche Überbeanspruchung am Antriebsrad.

Die Anordnung von Laschenverdickungen an der Laschenunter-und -oberseite macht es möglich, die Kette zwecks Verlängerung der Standzeit zu drehen.

Eine weitere Verbesserung ergibt sich durch eine nicht starre Verbindung zwischen Kette und Tragorgan. Auf die entsprechend einem weiteren Anspruch der Erfindung verlängerten Kettenbolzen wird eine Befestigungslasche lose, d.h. mit Spiel aufgesetzt, während eine feste Verbindung der Befestigungslaschen mit den Tragorganen besteht. Diese Anordnung reduziert bei schnellaufenden Becherwerken die durch den Polygoneffekt verursachten dynamischen Beanspruchungen der Becher so weit, daß diese wesentlich leichter ausgeführt werden können. Auch hier ergibt sich ein Beitrag zur Verringerung des Stranggewichtes und somit eine Verbesserung des Verhältnisses Nutzlast zu Totlast.

Nachfolgend wird anhand einer Zeichnung eine bevorzugte Ausführung näher beschrieben. In der Zeichnung zeigen:

Figur 1 eine Seitenansicht eines Teils einer Buchsenförderkette

Figur 2 eine Draufsicht zu Figur 1

Figur 3 einen Querschnitt durch eine Lasche nach Schnittlinie 1-1 aus Figur 1

Figur 4 die Draufsicht eines Teils einer Buchsenförderkette mit Bechern

Figur 5 eine teilweise geschnittene Ansicht entlang der Linie 2-2 gemäß Figur 4

Figur 6 eine Schnittansicht der Buchsenförderkette mit Becher entlang der Linie 3-3 gemäß Figur 4

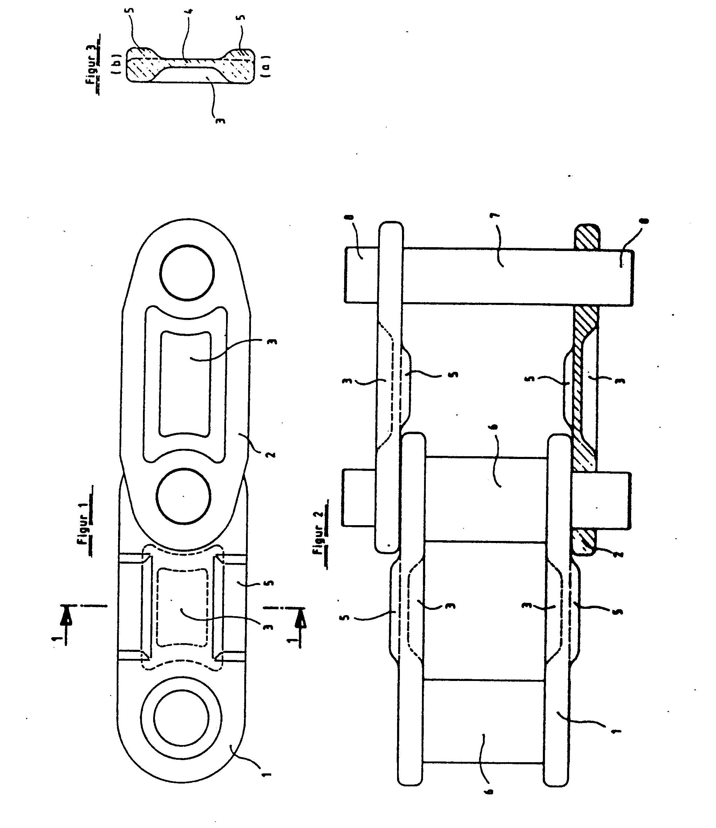

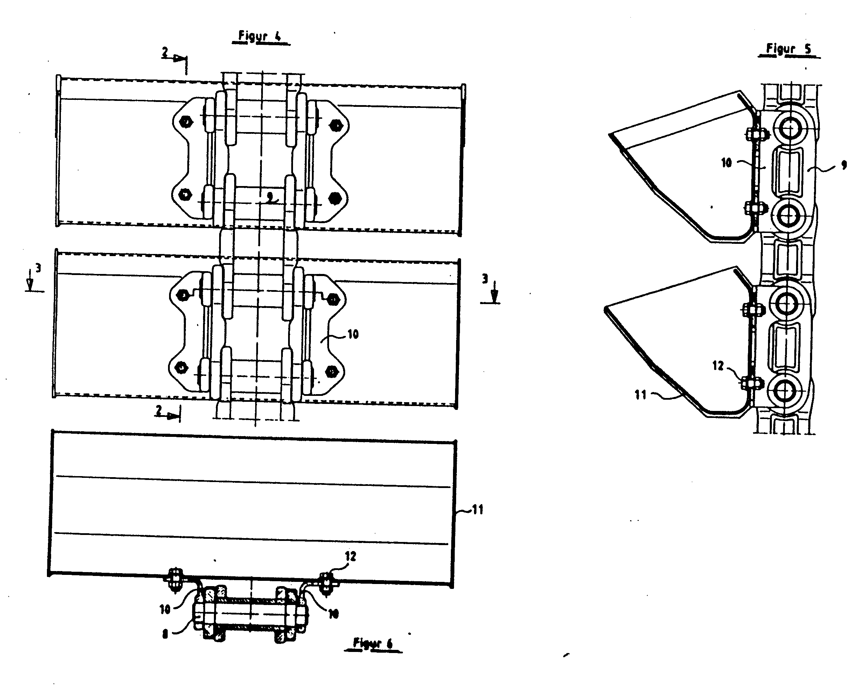

Figur 1 zeigt beispielhaft eine erfindungsgemäße Ausführung einer Buchsenförderkette mit geschmiedeten Flachlaschen. Innenlaschen (1) und Außenlaschen (2) weisen Entlastungsausschnitte (3) auf, die nicht durchgehend ausgeführt sind. Der Laschenquerschnitt erhält dadurch gemäß Figur 3 eine U-Form. Der verbleibende Reststeg im Bereich des Entlastungsausschnittes kann auch anders angeordnet werden, so daß z.B. ein Doppel-T-förmiger Laschenquerschnitt entsteht.

Bei Antriebsrädern ohne Zähne, oft eingesetzt bei schnellaufenden Becherwerken zur Verringerung von Eingriffstörungen bei verschleißbedingter Veränderung der Kettenteilung, ergibt sich durch die Auflage der Kettenbuchse auf der glatten Antriebsscheibe durch die ungünstige Schmiegung eine hohe Oberflächenpressung und damit großer Verschleiß durch die kraftschlüssige Übertragung der Umfangskräfte. Günstigere Verhältnisse ergeben sich bei zusätzlicher Abstützung der Laschen auf Stützflächen am Antriebsrad. Die hieraus resultierenden Querkräfte werden vom Reststeg (4) problemlos aufgenommen. Die Verbreiterung (5) der Laschen bewirkt eine Verringerung der Flächenpressung an den Auflaufstellen und damit eine Vergrößerung der Standzeit. Wenn Laschenverdickungen (5) auf der Laschenunterseite - (a) und auf der Oberseite (b) angeordnet sind, kann die Kette zur Verlängerung der Standzeit nach Verschleiß auf einer Seite um 180° gedreht werden.

Vervollständigt wird die Buchsenförderkette durch die Buchsen (6) und die Bolzen (7). Die Bolzen sind bei dieser beispielhaften Ausführung beidseitig nach außen verlängert (8), entsprechend einem weiteren Patentanspruch.

Die Figuren 4, 5 und 6 zeigen ein besonders bevorzugtes Ausführungsbeispiel der Erfindung. Die Buchsenförderkette (9) in beispielhafter Ausführung nach Figur 1 und 2 ist über winkelförmig ausgebildete Traglaschen (10) mit den Bechern (11) über eine Schraubverbindung (12) verbunden. Durch Spiel zwischen Mitnehmerlaschen (10) und den verlängerten Kettenbolzen werden die Schläge aus der Kettendynamik so weit gedämpft, daß die Becher (11) an den Schweißnähten der Bordbleche und an den Befestigungsstellen (12) nicht mehr durch Rißbildung gefährdet sind und sogar leichter gemacht werden können.

**Ansprüche**

1. Buchsenförderkette mit Flachlasche, **dadurch gekennzeichnet,** daß die Laschen einen Entlastungsausschnitt zwischen den Bohrungen aufweisen.

2. Buchsenförderkette nach Anspruch 1, **dadurch gekennzeichnet,** daß die Entlastungsausschnitte nicht durchgehend ausgeführt sind und die Laschen somit im Bereich des Entlastungsausschnittes einen Reststeg aufweisen.

3. Buchsenförderkette nach Anspruch 1 und 2, **dadurch gekennzeichnet,** daß die Innenlaschen auf der Außenseite und die Außenlaschen auf der Innenseite jeweils in Teilungsmitte einen Bereich der Verdickung aufweisen, der mit der Laschenunterseite als der dem Kettenrad zugewandten Seite abschließt.

4. Buchsenförderkette nach Anspruch 1 bis 3, **dadurch gekennzeichnet,** daß die Laschenverdickungen nach Anspruch 3 an der Laschenunterseite und der -oberseite aufweisen.

5. Buchsenförderkette nach Anspruch 1 bis 2, **dadurch gekennzeichnet**, daß die Buchsenförderkette verlängerte, nach außen vorstehende Bolzen aufweist, die in Befestigungs-Traglaschen zu den Bechern oder Bandplatten eingreifen.

Figur 3

Figur 1

Figur 2

Figur 4

Figur 5

Figur 6

0 226 986